# EUROPÄISCHE PATENTSCHRIFT

(11) **EP 2 882 370 B1**
(45) Veröffentlichungstag und Bekanntmachung des Hinweises auf die Patenterteilung: **24.06.2020**
(21) Anmeldenummer: 12746341.2
(22) Anmeldetag: 13.08.2012
(51) Int. Cl.: A61C 8/00

(54) **SEKUNDÄRTEIL, SET UND VERPACKUNG FÜR EIN DENTALIMPLANTATSYSTEM**
SECONDARY PART, SET AND PACKAGING FOR A DENTAL IMPLANT SYSTEM
PARTIE SECONDAIRE, KIT ET EMBALLAGE POUR UN SYSTÈME D'IMPLANT DENTAIRE

(43) Veröffentlichungstag der Anmeldung: 17.06.2015
(73) Patentinhaber: Camlog Biotechnologies GmbH, 4053 Basel (CH)
(72) Erfinder: SOLÈR, Christoph, CH-4222 Zwingen (CH); VACCARO, Antonio, 79689 Maulburg (DE)
(74) Vertreter: Hepp Wenger Ryffel AG
(86) Internationale Anmeldenummer: PCT/EP2012/065821
(87) Internationale Veröffentlichungsnummer: WO 2014/026706

(56) Entgegenhaltungen:
- EP-A1- 0 896 812
- EP-A1- 1 502 558
- EP-A1- 1 849 431
- EP-A1- 2 218 422
- WO-A1-2008/053058
- WO-A1-2011/055358
- WO-A1-2012/097955
- DE-A1-102009 015 358
- FR-A1- 2 929 102
- FR-A3- 2 969 484
- US-A- 6 068 480
- US-A1- 2002 025 505
- US-A1- 2002 110 784
- US-A1- 2006 228 672
- US-A1- 2011 306 014
- US-B1- 6 312 260
- US-B1- 6 416 324
- US-B1- 6 558 162

## Beschreibung

Die Erfindung betrifft ein Sekundärteil, ein Set umfassend das Sekundärteil und ein Dentalimplantat und eine Verpackung mit den Merkmalen der Oberbergriffe der unabhängigen Ansprüche. Dentalimplantate zum Ersatz von defekten oder fehlenden Zähnen sind bekannt. Dabei wird ein Implantat im Kieferknochen implantiert und darauf ein Sekundärteil, ein sog. Abutment fixiert. Das Sekundärteil dient als Basis für einen Zahnaufbau, typischerweise einem Keramikkörper. Im Rahmen des Einheilprozesses und der Herstellung des künstlichen Zahns werden zudem Hilfsteile wie Gingivaformer, Abformteile und Scankörper eingesetzt.

Aus der EP 1 013 237 ist ein Montagesatz umfassend ein Transportgehäuse, einen Einbringpfosten und ein Implantat bekannt. Mittels des Einbringpfostens ist das Implantat im Kieferknochen verankerbar, wobei nach Beendigung des Einbringungsvorgangs der Einbringpfosten zur Aufnahme beispielsweise eines Sekundärteils entfernt wird.

Dies hat den Nachteil, dass bei der Verwendung des Montagesatzes ein erhöhter Materialverbrauch entsteht und mehrere Schritte unter anderem zur Entnahme des Einbringpfostens notwendig sind, was aufwendig und hygienisch nachteilig sein kann.

Aus der WO 2004/098442 A1 ist ein Dentalimplantat mit einem Aussengewinde und rillenförmigen Vertiefungen am Gewindegrund bekannt. Das Dentalimplantat weist zudem axiale Schneidnuten auf. Dieses vorbekannte Dentalimplantat kann den Nachteil aufweisen, dass hohe Momente beim Eindrehen des Dentalimplantats im Kieferknochen notwendig sind.

Aus der US 2008/0254412 ist ein Gingivaformer mit einer durchgehenden Bohrung bekannt, in die ein Befestigungswerkzeug eingreifen kann.

Dieser Gingivaformer weist den Nachteil auf, dass gegebenenfalls durch die durchgehende Bohrung die Hygiene im Implantat, an und/oder in dem der Gingivaformer bei bestimmungsgemässem Gebrauch befestigt ist, nicht gewährleistet ist.

Aus der EP 2 351 536 A1 ist ein Adapter bekannt, der eine plane Fläche aufweist zur Bestimmung einer Orientierung eines implantatgetragenen Zahnersatzes mittels eines Scanvorgangs.

Dieser Adapter weist den Nachteil auf, dass lediglich ein Scannen zur Bestimmung der Position des Zahnersatzes ermöglicht wird. Daher ist eine Mehrzahl von verschiedenen Hilfskörpern für die unterschiedlichen Funktionen erforderlich.

US 2002/025505 zeigt ein System zur Abgabe eines Implantates, bei dem ein O-Ring vorgesehen ist. Der O-Ring ist in einer Nut auf der Innenseite eines Trägers angeordnet und dient als Rückhaltemechanismus für ein Werkzeug.

EP 1 849 431 zeigt einen Träger für ein Implantat. Der Träger weist eine Vertiefung auf, in der ein Dichtring angeordnet ist.

US 6 416 324 zeigt ein Eindrehwerkzeug. Das Werkzeug ist mit einem Eingriffsteil versehen, welches in einem Loch einer Einheilkappe für ein Implantat aufgenommen werden kann.

Es ist deshalb eine Aufgabe der vorliegenden Erfindung, die Nachteile des Bekannten zu vermeiden, insbesondere also ein Sekundärteil, ein Set, und eine Verpackung mit einem Set bereitzustellen, welche bei Verwendung einfach, zuverlässig, hygienisch und flexibel einsetzbar sind und die mit einem reduzierten Materialverbrauch kostengünstig herstellbar sind.

Erfindungsgemäss werden diese Aufgaben mit einem Sekundärteil, einem Set, und einer Verpackung gemäss den unabhängigen Ansprüchen gelöst.

Das erfindungsgemässe Sekundärteil zur Befestigung an und/oder in einem Dentalimplantat ist geeignet zur Aufnahme eines Tertiärteils. Das Sekundärteil umfasst einen Sekundärteilkörper mit einer Aufnahme im Inneren und eine in der Aufnahme aufnehmbare oder aufgenommene Sekundärteilschraube. Das Sekundärteil weist eine Eindreheinrichtung in Form einer Kontur zur Aufnahme eines Eindrehwerkzeuges auf zum Eindrehen des mit dem Sekundärteil verbundenen Dentalimplantats in einen Kieferknochen. Die Kontur wird durch den Sekundärteilkörper gebildet.

Unter einem "Sekundärteil" wird im Sinne der vorliegenden Anmeldung ein an und/oder in einem Dentalimplantat befestigbares Teil verstanden, das zur Aufnahme eines Hilfsteils oder eines Tertiärteils geeignet ist. Unter einem "Tertiärteil" wird im Sinne der vorliegenden Anmeldung ein an und/oder in einem Sekundärteil befestigbares Teil und insbesondere ein Teil geeignet für die Phase der Einheilung des Dentalimplantats und/oder der provisorischen beziehungsweise der definitiven prothetischen Versorgung verstanden. Beispielsweise kann ein Hilfsteil als Gingivaformer oder als Abformteil ausgebildet sein.

Nach Insertion und/oder Einheilung der Implantate im Kieferknochen bei bestimmungsgemässem Gebrauch der hier beschriebenen Erfindung können diese anschliessend nach heutigem Stand der Technik versorgt werden. Es wird daher nicht weiter auf diese Techniken eingegangen.

Die Ausgestaltung des Sekundärteils mit einer Eindreheinrichtung in Form einer Kontur weist den Vorteil auf, dass nicht wie aus dem Stand der Technik bekannt ein zusätzlicher Eindrehpfosten notwendig ist, was den Materialverbrauch und damit die Kosten verringert und die Handhabung vereinfacht.

Unter dem Begriff "Eindreheinrichtung" wird im Sinne der vorliegenden Anmeldung eine derartige Kontur des Sekundärteils verstanden, in die ein Eindrehwerkzeug einführbar ist, so dass das Sekundärteil mit dem Dentalimplantat mittels des Eindrehwerkzeugs in einen Kieferknochen eindrehbar ist. Insbesondere ist das Eindrehwerkzeug rotationsgesichert in die Eindreheinrichtung einführbar.

Unter der Bezeichnung "A und/oder B" werden im Sinne der vorliegenden Anmeldung die folgenden möglichen Kombinationen verstanden: A; B; A und B; A und kein B; B und kein A.

Die Sekundärteilschraube weist eine Selbsthaltestruktur für das Eindrehwerkzeug auf, wobei die Selbsthaltestruktur an einem Schraubenkopf der Sekundärteilschraube angeordnet ist. Die Selbsthaltestruktur wird durch zumindest einen Schlitz gebildet und ist als federnder Kopf ausgestaltet.

Insbesondere greift das Eindrehwerkzeug bei bestimmungsgemässem Gebrauch so um den Kopf mit dem zumindest einen Schlitz, dass der Schraubenkopf leicht zusammengedrückt und so durch das Eindrehwerkzeug haltbar ist, wobei bevorzugt ein Verschnappen zwischen Schnappstruktur der Selbsthaltestruktur und einer Schnappeinrichtung des Eindrehwerkzeugs erfolgt. Damit sind keine weiteren Halteeinrichtungen oder auch keine weitere manuelle Stützung durch den Zahnarzt notwendig.

Unter der Bezeichnung "Selbsthaltestruktur" wird im Sinne der vorliegenden Anmeldung eine Struktur verstanden, mittels der der Schraubenkopf und gegebenenfalls das Sekundärteil, welches den Schraubenkopf aufgenommen hat, ohne weitere Hilfsmittel durch das Eindrehwerkzeug haltbar ist; beispielsweise wird damit ermöglicht, dass das Sekundärteil mit dem Eindrehwerkzeug aus einer Verpackung entnehmbar ist und ohne weitere Werkzeuge oder manuelle Stützung zum Verwendungsort bringbar und einsetzbar ist.

Eine Selbsthaltestruktur für das Eindrehwerkzeug am Schraubenkopf hat den Vorteil, dass die Handhabung vereinfacht und sicherer wird.

Bevorzugt weist der Schraubenkopf der Sekundärteilschraube auf der Aussenseite eine Kontur für ein Schraubwerkzeug zum Befestigen und/oder Lösen des Sekundärteils am oder vom Dentalimplantat auf. Insbesondere ist der Schraubenkopf als Aussensechskant ausgebildet.

Eine Schraubkontur auf der Aussenseite des Schraubenkopfs hat den Vorteil, dass dadurch ein gegenüber dem Stand der Technik kleinerer Schraubenkopf ermöglicht wird. Zwischen einer Innenwand des Sekundärteils und dem Schraubenkopf steht daher mehr Platz zur Verfügung und die Innenwand kann mit geringem Durchmesser hergestellt werden.

Bevorzugt weist der Sekundärteilkörper im Bereich des Schraubenkopfs einen Führungsabschnitt für das Schraubwerkzeug auf.

Unter einem "Führungsabschnitt" wird im Sinne der vorliegenden Anmeldung verstanden, dass das Schraubwerkzeug oder gegebenenfalls andere Instrumente beim Greifen der Schraubkontur des Schraubenkopfs auf der dem Schraubenkopf abgewandten Seite des Schraubwerkzeugs durch den Sekundärteilkörper führbar ist.

Die Anordnung des Führungsabschnitts weist den Vorteil auf, dass eine verbesserte und zuverlässigere Positionierung des Schraubwerkzeugs an der Schraubkontur ermöglicht wird.

Bevorzugt ist die Aufnahme des Sekundärteils zumindest abschnittsweise als Innensechskant ausgebildet, wobei der Innensechskant insbesondere als Kontur zur Aufnahme des Eindrehwerkzeuges dient.

Dies erlaubt eine einfache und zuverlässige Handhabung der Eindreheinrichtung, die Platz sparend ist. Zudem ist beispielsweise das Eindrehwerkzeug durch den Abschnitt mit Innensechskant zuverlässig zur Selbsthaltestruktur führbar.

Bevorzugt ist der Sekundärteilkörper aussenseitig bei bestimmungsgemässem Gebrauch abschnittsweise mit einer Kontur ausgebildet, die als Formung der Gingiva dient.

Damit kann eine teilweise Ausformung des Weichgewebes durch das Sekundärteil nach Verankerung des Implantats im Kieferknochen erfolgen.

Diese Kontur des Sekundärteilkörpers und ein Gingivaformer am und/oder im Sekundärteil bilden zusammen eine Gingiva-Kontur auf der Aussenseite.

Weiter insbesondere weist diese Kontur parallel zur Längsachse vom apikalen Ende zum koronalen Ende hin abschnittsweise einen konisch sich verbreiternden Bereich auf, der insbesondere nach aussen gewölbt ist.

Unter dem "apikalen Ende" wird im Sinne der vorliegenden Anmeldung das zur Wurzelspitze hin gerichtete Ende eines Teils bei bestimmungsgemässem Gebrauch verstanden. Unter einem "koronalen Ende" wird im Sinne der vorliegenden Anmeldung das zur Zahnkrone hin gerichtete Ende eines Teils bei bestimmungsgemässem Gebrauch verstanden.

Ein weiterer Aspekt der vorliegenden Erfindung betrifft ein Sekundärteil mit einem Sekundärteilkörper, wie oben beschrieben, der eine Schnappkontur zur Verbindung mit einem aufschnappbaren Hilfsteil wie z.B. einen Gingivaformer aufweist. Insbesondere ist die Schnappkontur eine äussere Schnappkontur. Weiter insbesondere ist die Verbindung lösbar. Insbesondere weist das Sekundärteil eine Verdrehsicherung für das Hilfsteil auf.

Eine äussere Schnappkontur hat den Vorteil, dass ein Hilfsteil einfach in der Handhabung und zuverlässig mit dem Sekundärteilkörper verbindbar ist. Alternativ ist auch eine innere Schnappkontur möglich.

Unter einer "Verdrehsicherung" wird im Sinne der vorliegenden Anmeldung verstanden, dass eine relative Rotation zwischen zwei oder mehr Körpern im Wesentlichen verhindert wird.

Eine Verdrehsicherung hat den Vorteil, dass die Position des Hilfsteils am und/oder im Sekundärteilkörper fixierbar ist.

Bevorzugt ist die Schnappkontur derart ausgebildet, dass ein am und/oder im Sekundärteil aufschnappbares Hilfsteil im Wesentlichen parallel zur Aufschnapprichtung gegen eine Anschlagfläche des Sekundärteils anpressbar ist. Insbesondere weist das Sekundärteil eine Schulter auf, gegen die das Hilfsteil unter Erzeugung einer Vorspannung im Hilfsteil anpressbar ist. Mit anderen Worten wird also die durch die Vorspannung in Aufschnapprichtung erzeugte Kraft von der Schulter aufgenommen.

Unter der "Aufschnapprichtung" wird im Sinne der vorliegenden Anmeldung eine Richtung vom koronalen zum apikalen Ende verstanden, d. h. im Wesentlichen parallel zur Längsachse.

Eine derartige Anpressung kann beispielsweise dadurch erreicht werden, dass die Schnappkontur einen Vorsprung und das Hilfsteil eine Aussparung aufweist, wobei der Vorsprung im eingeschnappten Zustand in die Aussparung eingreift. Alternativ sind die Aussparung und der Vorsprung zwischen Sekundärteil und Hilfsteil vertauscht. Bei geeigneter Anordnung bezogen auf die Längsachse von Sekundärteil oder Hilfsteil bzw. Dimensionierung von Aussparung, Vorsprung und Anschlagfläche kann im eingeschnappten Zustand eine Vorspannung in Aufschnapprichtung erreicht werden; beispielsweise kann dies durch eine Aussparung sowie einen im Wesentlichen komplementären Vorsprung erreicht werden, die im eingeschnappten Zustand ineinander eingreifen und bezogen auf die Anschlagflächen von Sekundärteil und Hilfsteil parallel zur Längsachse, d. h. axial so zueinander versetzt sind, dass eine Vorspannung in axialer Richtung entsteht.

Bevorzugt ist die Schulter zur Aufnahme einer im Wesentlichen parallel zur Dentalimplantatlängsachse wirkenden Kraft ausgebildet.

Besonders bevorzugt ist der Sekundärteilkörper aussenseitig abschnittsweise konisch zulaufend ausgebildet in Richtung des Endes, an dem das Hilfsteil aufnehmbar ist. Mit anderen Worten ist also der Sekundärteilkörper zum koronalen Ende hin zumindest abschnittsweise konisch zulaufend ausgebildet.

Dies hat den Vorteil, dass ein Hilfsteil einfacher am und/oder im Sekundärteilkörper anordenbar ist, da das Einsetzen durch den konischen Verlauf am koronalen Ende erleichtert wird.

Insbesondere beträgt der Winkel zwischen der Längsachse des Sekundärteilkörpers und dem konischen Abschnitt zwischen 5° bis 15°, bevorzugt 7.5° bis 12.5° und besonders bevorzugt von 9° bis 11° auf.

Bevorzugt weist der Sekundärteilkörper einen Halsbereich zur Aufnahme des Hilfsteils oder eines Tertiärteils auf. Insbesondere umfasst der Halsbereich die Schnappkontur. Aussenseitig ist im Halsbereich zumindest eine Vertiefung zur Aufnahme eines Klebemittels angeordnet, derart, dass der Sekundärteilkörper im Halsbereich mit einem Tertiärteil fest verbindbar ist.

Unter dem "Halsbereich" wird im Sinne der vorliegenden Anmeldung der Bereich des Sekundärteilkörpers verstanden, der dem koronalen Ende zugewandt und zur Aufnahme des Tertiärteils geeignet ist.

Bevorzugt ist die Vertiefung um den Halsbereich umlaufend ausgebildet und in einer Ebene im Wesentlichen senkrecht zur Dentalimplantatlängsachse angeordnet.

Alternativ kann die umlaufende Vertiefung im Halsbereich eine Steigung analog zu einem Gewinde haben und über ein bis mehrere Gewindegänge verfügen.

Bevorzugt sind zwei umlaufende Vertiefungen im Halsbereich angeordnet, die im Wesentlichen parallel zur Dentalimplantatlängsachse voneinander beabstandet sind.

Bevorzugt weist die Sekundärteilschraube zumindest einen Sollbruchbereich auf. Insbesondere ist der Sollbruchbereich zwischen dem Schraubenkopf und dem Gewinde der Sekundärteilschraube angeordnet.

Ein Sollbruchbereich hat den Vorteil, dass eine Deformierung des Schraubenkopfs vermeidbar ist.

Insbesondere ist der Sollbruchbereich derart angeordnet, dass mittels eines Entfernungswerkzeugs der Teil der Sekundärteilschraube zwischen Sollbruchbereich und apikalem Ende aus dem Dentalimplantat entfernbar ist.

Bevorzugt besteht der Sekundärteilkörper aus Titan oder einer Titanlegierung, insbesondere Ti6Al4V.

Besonders bevorzugt weist der Sekundärteilkörper ein insbesondere inneres Lösegewinde für ein Löseinstrument auf.

Unter einem "inneren Lösegewinde" wird im Sinne der vorliegenden Anmeldung ein innenseitig im Sekundärteilkörper angeordnetes Gewinde verstanden, in das ein Löseinstrument zum Entnehmen des Sekundärteilkörpers aus dem Dentalimplantat eingreifen kann.

Ein weiterer Aspekt der vorliegenden Erfindung betrifft ein Set umfassend ein Dentalimplantat und ein Sekundärteil. Das Sekundärteil ist ein Sekundärteil wie oben beschrieben. Das Sekundärteil ist erfindungsgemäss im Dentalimplantat vormontiert. Das Sekundärteil ist gleichzeitig als Eindreheinrichtung in Form einer Kontur zur Aufnahme eines Eindrehwerkzeuges für das Dentalimplantat ausgebildet. Insbesondere ist ein Sekundärteilkörper und/oder eine Sekundärteilschraube als Eindreheinrichtung ausgebildet.

Unter dem Begriff "vormontiert" wird im Sinne der vorliegenden Anmeldung verstanden, dass das Set im montierten Zustand verkauft und/oder geliefert wird.

Das Set umfasst ein Sekundärteil mit einer Eindreheinrichtung, was die vorstehend erläuterten Vorteile bewirkt. Zudem wird durch die Vormontage die Handhabung noch weiter erleichtert.

Das Sekundärteil ist im Dentalimplantat mittels der Sekundärteilschraube vormontiert.

Ein zusätzlicher Aspekt der vorliegenden Erfindung betrifft eine Verpackung enthaltend ein Set wie vorstehend beschrieben.

Das Set wird also insbesondere herstellerseitig verpackt und in einer Verpackung vormontiert verkauft und/oder geliefert.

Bevorzugt enthält die Verpackung ein steriles Set, was die Handhabung des Sets weiter vorteilhaft vereinfacht, da durch den Benutzer keine weitere Sterilisierung notwendig ist.

Ausserdem wird ein Dentalimplantat zum Einsetzen in einen Kieferknochen beschrieben. Insbesondere ist das Dentalimplantat geeignet zur Verwendung mit einem Sekundärteil wie vorstehend beschrieben. Weiter insbesondere ist das Dentalimplantat geeignet zur Verwendung in einem Set wie vorstehend beschrieben. Das Dentalimplantat umfasst ein Aussengewinde zum Verankern des Dentalimplantats im Kieferknochen mit einem Gewindegrund, wobei der Gewindegrund zumindest eine Erhöhung aufweist. Im Bereich des Aussengewindes sind zumindest zwei Schneidnuten angeordnet. Die Schneidnuten sind als verdrehte Schneidnuten und als zumindest eine kurze Schneidnut und zumindest eine lange Schneidnut ausgebildet, wobei die kurze Schneidnut kürzer als die lange Schneidnut ist.

Alternativ können die Schneidnuten auch parallel zur Dentalimplantatlängsachse ausgerichtet sein.

Unter dem "Gewindegrund" wird im Sinne der vorliegenden Anmeldung der Bereich des Gewindes verstanden, der sich zwischen zwei benachbarten Gewindeflanken befindet. Mit anderen Worten ist also eine Erhöhung zwischen zwei benachbarten Gewindeflanken im Gewindebereich angeordnet.

Unter einer "verdrehten Schneidnut" wird im Sinne der vorliegenden Anmeldung eine auf der Aussenseite des Dentalimplantats angeordnete Nut verstanden, die eine axiale Komponente parallel zur Dentalimplantatlängsachse und eine Umfangskomponente um das Dentalimplantat senkrecht zur Dentalimplantatlängsachse aufweist. Mit anderen Worten weist eine verdrehte Schneidnut zumindest abschnittsweise einen schraubenlinienartigen Verlauf auf. Insbesondere nimmt ein Abstand der verdrehten Schneidnut in einer Richtung senkrecht zur Dentalimplantatlängsachse zumindest abschnittsweise in einer Richtung parallel zur Dentalimplantatlängsachse gegen das koronale Ende hin zu.

Die Anordnung zumindest einer Erhöhung am Gewindegrund sowie die Anordnung von verdrehten Schneidnuten unterschiedlicher Länge hat in der Praxis eine Reduktion des notwendigen Eindrehmoments bei gleichzeitiger Erzielung einer ausreichenden Primärstabilität und daher in der Folge einer guten Verwachsung des Dentalimplantats mit dem Kieferknochen ergeben. Die Erhöhung am Gewindegrund entspricht idealerweise dem Durchmesser des Bohrwerkzeuges.

Zudem wird eine einfache Herstellung mit einer Drehmaschine ermöglicht, was einfach und kostengünstig ist.

Insbesondere ist das Gewinde eingängig. Alternativ kann das Gewinde mehrgängig ausgebildet sein.

Insbesondere weisen die Schneidnuten einen Winkel im Bereich von 2° bis 10° und bevorzugt von 4° bis 8° zu einer Oberflächenparallelen auf, die vom koronalen Ende zum apikalen Ende im Wesentlichen parallel zur Dentalimplantatlängsachse auf der Oberfläche verläuft.

Bevorzugt überstreicht die lange Schneidnut entlang der Dentalimplantatlängsachse zumindest das gesamte Aussengewinde.

Bevorzugt deckt das Aussengewinde zumindest 85%, bevorzugt 89% und besonders bevorzugt zumindest 91% der Dentalimplantatlänge ab.

Bevorzugt ist das Dentalimplantat in einem dem koronalen Ende zugewandten Koronalbereich im Wesentlichen zylindrisch ausgebildet.

Als "Koronalbereich" wird im Sinne der vorliegenden Anmeldung der dem koronalen Ende zugewandte Bereich des Dentalimplantats verstanden, wobei sich der Koronalbereich insbesondere über mindestens die halbe Länge des Dentalimplantats erstreckt.

Unter dem Begriff "im Wesentlichen zylindrisch" wird im Sinne der vorliegenden Anmeldung unter anderem ein zylindrischer Körper verstanden, in dem aussenseitig ein Gewinde angeordnet und/oder eingeschnitten ist.

Die im Wesentlichen zylindrische Ausbildung des Koronalbereichs hat den Vorteil, dass eine weiter verbesserte Verankerung des Dentalimplantats im Kieferknochen erreichbar ist und ein Innenbereich des Dentalimplantats zur Aufnahme eines Sekundärteils in der Grösse maximiert wird für eine möglichst flexible und zuverlässige Verbindung von Dentalimplantat und Sekundärteil.

Bevorzugt ist das Dentalimplantat in einem dem apikalen Ende zugewandten Apikalbereich im Wesentlichen konisch zum apikalen Ende zulaufend ausgebildet. Insbesondere ist das Dentalimplantat am apikalen Ende als Stumpf ausgebildet.

Unter dem "Apikalbereich" wird analog zum Koronalbereich der dem apikalen Ende zugewandte Bereich des Dentalimplantats verstanden, der ausgehend vom apikalen Ende insbesondere 3 - 5 mm bevorzugt 4 mm der Länge des Dentalimplantats umfasst.

Die im Wesentlichen konische Ausbildung des Apikalbereichs hat den Vorteil der vereinfachten Verankerbarkeit des Dentalimplantats bei möglichst minimal notwendigem Eindrehmoment in den Kieferknochen.

Bevorzugt sind am Dentalimplantat drei lange Schneidnuten angeordnet oder zwei kurze Schneidnuten und zwei lange Schneidnuten.

Besonders bevorzugt sind die kurzen Schneidnuten und die langen Schneidnuten in Umfangsrichtung des Dentalimplantats alternierend angeordnet. Mit anderen Worten folgt in Umfangsrichtung gesehen eine kurze Schneidnut einer langen Schneidnut, wobei dies lediglich für den Bereich des Dentalimplantats gilt, in dem eine kurze Schneidnut und eine lange Schneidnut angeordnet sind, d. h. im Wesentlichen im Apikalbereich.

Bevorzugt erstreckt sich die kurze Schneidnut vom apikalen Ende. Bevorzugt überstreicht die kurze Schneidnut den Apikalbereich und besonders bevorzugt etwa die Hälfte der Länge des Aussengewindes ausgehend vom apikalen Ende parallel zur Dentalimplantatlängsachse.

Bevorzugt weist das dem koronalen Ende zugewandte Ende der zumindest einen kurzen Schneidnut parallel zur Dentalimplantatlängsachse einen Nutabstand im Bereich von 3.5 mm bis 4.5 mm zum koronalen Ende auf. Bevorzugt beträgt der Nutabstand 3.7 mm bis 4.3 mm und besonders bevorzugt etwa 4 mm.

Unter dem "Nutabstand" der kurzen Schneidnut wird im Sinne der vorliegenden Anmeldung der Abstand zwischen einem dem apikalen Ende abgewandten Ende der kurzen Schneidnut und dem koronalen Ende des Dentalimplantats verstanden, wobei der Nutabstand parallel zur Dentalimplantatlängsachse auf der Oberfläche des Dentalimplantats gemessen wird.

Besonders bevorzugt sind am Gewindegrund zumindest zwei Erhöhungen, bevorzugt genau zwei Erhöhungen zwischen zwei benachbarten Gewindeflanken des Aussengewindes angeordnet. Die Erhöhungen sind insbesondere derart angeordnet, dass am Gewindegrund drei Rillen zwischen den zwei benachbarten Gewindeflanken angeordnet sind.

Bevorzugt entspricht der Durchmesser der Erhöhungen dem Durchmesser eines zum Einsetzen des Dentalimplantates verwendeten Bohrwerkzeuges. Dies hat den Vorteil einer weiteren Reduktion des notwendigen Eindrehmoments bei guter Verwachsung des Dentalimplantats mit dem Kieferknochen.

Bevorzugt ist die zumindest eine Erhöhung im Wesentlichen parallel zu einer Gewindeflanke des Aussengewindes angeordnet.

Unter der Anordnung einer Erhöhung "im Wesentlichen parallel" zu einer Gewindeflanke wird im Sinne der vorliegenden Anmeldung verstanden, dass die Erhöhung zumindest abschnittsweise parallel zur Gewindeflanke verläuft.

Insbesondere weist die Erhöhung im Wesentlichen eine Länge entsprechend der Länge der Gewindeflanke auf, zu der die Erhöhung im Wesentlichen parallel angeordnet ist; bevorzugt ist die Erhöhung als durchgängige und nur durch die Schneidnuten unterbrochene Erhöhung ausgebildet.

Bevorzugt hat die zumindest eine Erhöhung eine kleinere Höhe als die benachbarten Gewindeflanken, gemessen vom Gewindegrund senkrecht zur Dentalimplantatlängsachse.

Insbesondere hat die zumindest eine Erhöhung eine Höhe im Bereich von 10% bis 40% der benachbarten Gewindeflanke, bevorzugt von 15% bis 35% und besonders bevorzugt 20% bis 30%.

Besonders bevorzugt weist das Dentalimplantat ausgehend vom koronalen Ende einen Dentalimplantathohlraum zur Aufnahme eines Sekundärteils am und/oder im Dentalimplantat auf. Im Dentalimplantathohlraum ist ein Innengewinde zur Verschraubung des Sekundärteils mit dem Dentalimplantat angeordnet. Zwischen dem koronalen Ende und dem Innengewinde ist ein Rotationssicherungsabschnitt angeordnet. Zwischen dem koronalen Ende und dem Rotationssicherungsabschnitt ist ein zum apikalen Ende zulaufender Abschnitt angeordnet, der insbesondere als ein Konusabschnitt ausgebildet ist.

Insbesondere weist das Sekundärteil eine im Wesentlichen komplementäre Form zum Dentalimplantathohlraum auf, derart, dass das Sekundärteil zumindest teilweise im Dentalimplantathohlraum aufnehmbar ist.

Unter einem "Rotationssicherungsabschnitt" wird ein derartig ausgebildeter Abschnitt verstanden, mittels dem eine rotative Fixierung zwischen Dentalimplantat und Sekundärteil erreichbar ist.

Beschrieben ist ausserdem ein Gingivaformer zur Verwendung mit einem Sekundärteil wie oben beschrieben. Der Gingivaformer weist eine Struktur auf, mittels der der Gingivaformer auf eine Schnappkontur des Sekundärteils aufschnappbar und insbesondere lösbar mit dem Sekundärteil verbindbar ist.

Der Gingivaformer weist die vorstehend erläuterten Vorteile der Schnappkontur auf.

Ein Gingivaformer kann auf der dem Sekundärteil abgewandten Seite einen Eingriffsbereich für ein Werkzeug zum Einsetzen und/oder Entnehmen des Gingivaformers aufweisen.

Bevorzugt ist der Gingivaformer aus Kunststoff hergestellt.

Dies hat den Vorteil von geringen Herstellungskosten, weshalb der Gingivaformer als Wegwerfteil ausgebildet werden kann.

Ein Abformteil, welches insbesondere mit einem Sekundärteil wie oben beschrieben verwendet werden kann, kann für zumindest zwei beliebige der folgenden Verwendungen geeignet sein: Scankörper, Abformkörper, Provisorium, Einheilkappe.

Unter einem "Scankörper" wird im Sinne der vorliegenden Anmeldung verstanden, dass mittels eines optischen Verfahrens die Ausrichtung des Abformteils bestimmbar ist zur Bestimmung der rotativen und/oder axialen Position von Dentalimplantat und/oder Sekundärteil in Relation zur anatomischen Struktur.

Unter einem "Abformkörper" wird im Sinne der vorliegenden Anmeldung verstanden, dass die rotative und/oder axiale Position von Dentalimplantat und/oder Sekundärteil in Relation zur anatomischen Struktur mittels Abformung beispielsweise durch Abdrucknahme mit einer Abformmasse bestimmbar ist.

Unter einem "Provisorium" wird ein temporärer Ersatz für einen fehlenden Zahn verstanden.

Unter einer "Einheilkappe" wird im Sinne der vorliegenden Anmeldung ein Verschluss des Sekundärteils am koronalen Ende verstanden, um den Heilprozess unter möglichst optimalen hygienischen Bedingungen erfolgen lassen zu können.

Die Ausgestaltung des Abformteils derart, dass zumindest zwei beliebige Verwendungen wie vorstehend erläutert durch das Abformteil erfüllt werden, hat den Vorteil, dass die Kosten, die Hygiene und die Handhabung verbessert werden.

Insbesondere ist das Abformteil derart ausgebildet, dass dieses als Scankörper und Abformkörper geeignet ist und zusätzlich bevorzugt als Provisorium.

Bevorzugt weist das Abformteil eine Struktur auf, mittels der das Abformteil auf eine Schnappkontur des Sekundärteils aufschnappbar und insbesondere lösbar mit dem Sekundärteil verbindbar ist.

Besonders bevorzugt weist das Abformteil auf der dem Sekundärteil abgewandten Seite einen Abformteileingriff auf für ein Werkzeug zum Einsetzen und/oder Entnehmen des Abformteils.

Unter dem Begriff "Abformteileingriff" wird im Sinne der vorliegenden Anmeldung verstanden, dass das Abformteil eine Aussparung aufweist, in die ein Werkzeug eingreifen kann.

Bevorzugt ist das Abformteil zylinderförmig ausgebildet, wobei im Wesentlichen senkrecht zur Zylinderachse zumindest eine Nut angeordnet ist und wobei eine im Wesentlichen plane Fläche im Wesentlichen parallel zur Zylinderachse angeordnet ist.

Unter einer "planen Fläche" wird eine im Wesentlichen ebene Fläche verstanden, die jedoch eine übliche Oberflächenrauhigkeit entsprechend der Herstellungsmethode der planen Fläche aufweist. Die plane Fläche ist so ausgestaltet, dass diese mittels optischer Verfahren intra- und/oder extraoral scanbar ist zur Positionsbestimmung des Abformteils.

Mittels der Anordnung zumindest einer Nut und der planen Fläche ist das Abformteil vorteilhaft geeignet zur Bildung eines Scankörpers und eines Abformkörpers.

Bevorzugt sind zumindest zwei, insbesondere zumindest drei und weiter insbesondere vier Nuten am Abformteil angeordnet, die im Wesentlichen parallel zur Zylinderachse voneinander beabstandet sind und insbesondere im Wesentlichen parallel zueinander verlaufen.

Besonders bevorzugt sind die zumindest eine Nut und die im Wesentlichen plane Fläche voneinander beabstandet, insbesondere durch einen Teil einer Mantelfläche des Abformteils.
Unter einer Beabstandung von Nut und planer Fläche voneinander wird im Sinne der vorliegenden Anmeldung verstanden, dass die Nut nicht die plane Fläche berührt.

Diese Anordnung von Nut und planer Fläche hat den Vorteil, dass eine optimale Abformgenauigkeit und/oder Scangenauigkeit entsprechend den Anforderungen erreichbar ist.

Ganz besonders bevorzugt ist die zumindest eine Nut als gerade Nut ausgebildet.

Bevorzugt ist das Abformteil bearbeitbar zur Formung des Provisoriums.

Dies hat den Vorteil, dass das Abformteil nach der Lagebestimmung bearbeitbar ist zur Bildung einer provisorischen prothetischen Restauration, was den Behandlungsaufwand verkleinert und damit effizienter macht, was wiederum kostengünstig ist.

Ein Dentalimplantatsystem umfassend ein Set wie vorstehend beschrieben kann zumindest eine der folgenden Komponenten oder beliebige Kombinationen daraus aufweisen: Gingivaformer wie oben beschrieben; Abformteil wie oben beschrieben; Bohrwerkzeug zum Bohren eines Lochs in einen Kieferknochen; Werkzeug zum Einsetzen und/oder Entnehmen des Abformteils und/oder des Gingivaformers; Eindrehwerkzeug zum Eindrehen des Dentalimplantats; Schraubwerkzeug zum Befestigen und/oder Lösen des Sekundärteils am oder vom Dentalimplantat.

Bevorzugt werden die Komponenten des Dentalimplantatsystems einzeln in separaten Verpackungen und/oder zusammen in einer gemeinsamen Verpackung verpackt.

Bevorzugt ist das Dentalimplantatsystem sterilisiert.

Insbesondere ist zumindest das Set und/oder eine der Komponenten des Dentalimplantatsystems in einer geeigneten Verpackung sterilisiert. Bevorzugt sind das Set und alle Komponenten in einer geeigneten Verpackung sterilisiert. Insbesondere erfolgt die Sterilisierung mittels Gammastrahlung.

Ausserdem ist ein Verfahren zur Herstellung eines Dentalimplantats wie oben beschrieben mit einer Drehmaschine gezeigt, insbesondere einer Langdrehmaschine. Zumindest die Aussengewindekontur des Dentalimplantats wird mit einer Langdrehmaschine mittels eines einzigen Werkzeugs gebildet. Dabei können die Schneidnuten mittels einer Fräseinrichtung in einem nachgeschalteten Schritt gebildet werden.

Dies hat den Vorteil, dass ohne Werkzeugwechsel das Dentalimplantat schnell und kostengünstig mit üblichen Drehmaschinen herstellbar ist.

Die Erfindung wird im Folgenden anhand der Zeichnungen und in Ausführungsbeispielen näher erläutert, ohne die Erfindung auf diese zu beschränken. Es zeigen:
- Figur 1:: perspektivische Darstellung eines Dentalimplantats von oben;
- Figur 2:: Seitenansicht des Dentalimplantats gemäss Figur 1;
- Figur 3:: Schnitt durch ein Dentalimplantat gemäss Figur 1 mit sichtbarem äusserem Umriss des Dentalimplantathohlraums;
- Figur 4:: Schnitt durch das Dentalimplantat wie in Figur 3 dargestellt mit einem montierten erfindungsgemässen Sekundärteil;
- Figur 5:: Seitenansicht eines parallel zur Sekundärteillängsachse aufgeschnittenen erfindungsgemässen Sekundärteils mit einer eingesetzten Sekundärteilschraube;
- Figur 6:: schematische Darstellung eines im Kieferknochen eingesetzten Dentalimplantats mit Sekundärteil, Gingivaformer und Werkzeug zur Entnahme des Gingivaformers;
- Figur 7:: vergrösserter Ausschnitt des Halsbereichs des Sekundärteils gemäss Figur 5 mit aufgenommenem Gingivaformer;
- Figur 8:: Seitenansicht eines aufgeschnittenen Gingivaformers mit Werkzeug zur Handhabung des Gingivaformers;
- Figur 9:: Seitenansicht eines Abformteils;
- Figur 10:: Seitenansicht des aufgeschnittenen Abformteils gemäss Figur 9;
- Figur 11:: perspektivische Darstellung des Abformteils gemäss Figur 10;
- Figur 12:: schematische Darstellung eines Kieferknochens mit Weichgewebe und Bohrwerkzeug;
- Figur 13:: schematische Darstellung des Kieferknochens mit Weichgewebe gemäss Figur 12 mit in einer Bohrung aufgenommenem Dentalimplantat und erfindungsgemässem Sekundärteil;
- Figur 14:: schematische Darstellung des Kieferknochens mit Weichgewebe gemäss Figur 13 mit zusätzlichem Gingivaformer;
- Figur 15:: schematische Darstellung des Kieferknochens mit Weichgewebe gemäss Figur 13 mit aufgenommenem Abformteil;
- Figur 16:: schematische Darstellung einer erfindungsgemässen Verpackung enthaltend ein vormontiertes, erfindungsgemässes Set;
- Figur 17:: schematische Darstellung eines Dentalimplantatsystems umfassend das erfindungsgemässe Set und ein Bohrwerkzeug.

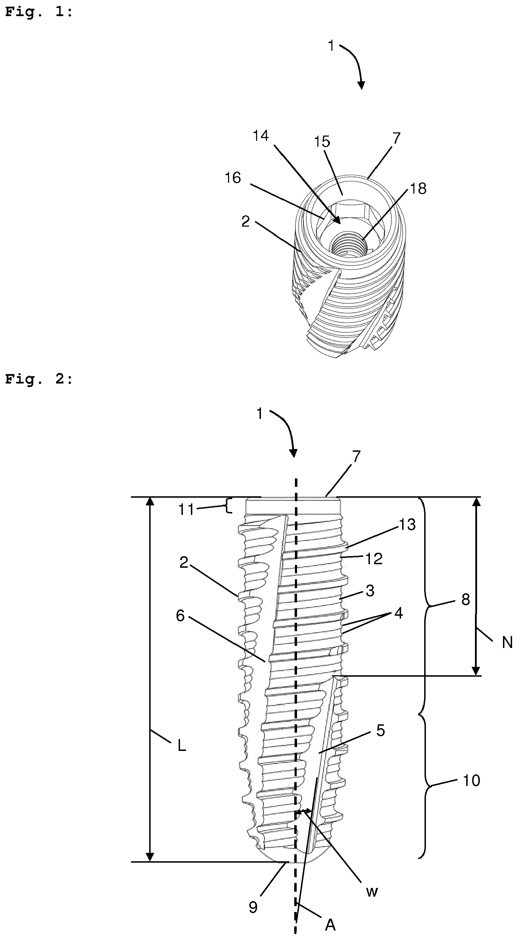

In Figur 1 ist in perspektivischer Darstellung von oben ein Dentalimplantat 1 dargestellt.

Das Dentalimplantat 1 weist ein Aussengewinde 2 zur Verankerung des Dentalimplantats 1 in einem Kieferknochen auf. Im Aussengewinde 2 sind hier nicht näher bezeichnete Schneidnuten angeordnet.

Das Dentalimplantat 1 weist ein koronales Ende 7 auf, von dem sich zum hier nicht bezeichneten apikalen Ende abschnittsweise ein Dentalimplantathohlraum 14 erstreckt.

Der Dentalimplantathohlraum 14 umfasst einen Konusabschnitt 15, einen Rotationssicherungsabschnitt 16 und ein Innengewinde 18. In dem Dentalimplantathohlraum 14 ist ein Sekundärteil zumindest teilweise aufnehmbar.

In Figur 2 ist in einer Seitenansicht das Dentalimplantat 1 gemäss Figur 1 dargestellt.

Gleiche Referenzzeichen bezeichnen gleiche Merkmale in allen Figuren und werden deshalb nur bei Bedarf erneut erläutert.

Das Dentalimplantat 1 weist zwischen dem koronalen Ende 7 und dem Bereich mit dem Aussengewinde 2 einen zylindrisch ausgebildeten Bereich 11 auf.

Das Aussengewinde 2 ist als eingängiges Gewinde ausgebildet und weist zwischen benachbarten Gewindeflanken 13 zwei umlaufende Erhöhungen 4 auf, die im Wesentlichen parallel zu den Gewindeflanken 13 des Aussengewindes 2 verlaufen. Hierdurch bilden sich zwischen zwei benachbarten Gewindeflanken 13 drei Rillen 12. Das Aussengewinde 2 weist einen Gewindegrund 3 auf.

Das Dentalimplantat 1 weist einen dem koronalen Ende 7 zugewandten Koronalbereich 8 auf, der im Wesentlichen zylindrisch ausgebildet ist. Zudem weist das Dentalimplantat 1 einen einem apikalen Ende 9 zugewandten Apikalbereich 10 auf, der zum apikalen Ende 9 im Wesentlichen konisch zulaufend ist. Am apikalen Ende 9 ist der Apikalbereich 10 als Stumpf ausgebildet.

Das Dentalimplantat 1 gemäss Figur 2 weist eine Implantatlänge L von etwa 13 mm auf, wobei das Aussengewinde 2 etwa 91% der Dentalimplantatlänge abdeckt.

Im Aussengewinde 2 sind zwei kurze Schneidnuten 5 sowie zwei lange Schneidnuten 6 angeordnet, wobei in der vorliegenden Darstellung lediglich eine kurze Schneidnut 5 und eine lange Schneidnut 6 sichtbar sind.

Die kurze Schneidnut 5 hat einen Nutabstand N vom koronalen Ende von etwa 4 mm.

Ein Nutwinkel w zwischen Implantatlängsachse A und der kurzen Schneidnut 5 beträgt ca. 4°. Die lange Schneidnut 6 weist den gleichen Winkel zur Implantatlängsachse A auf.

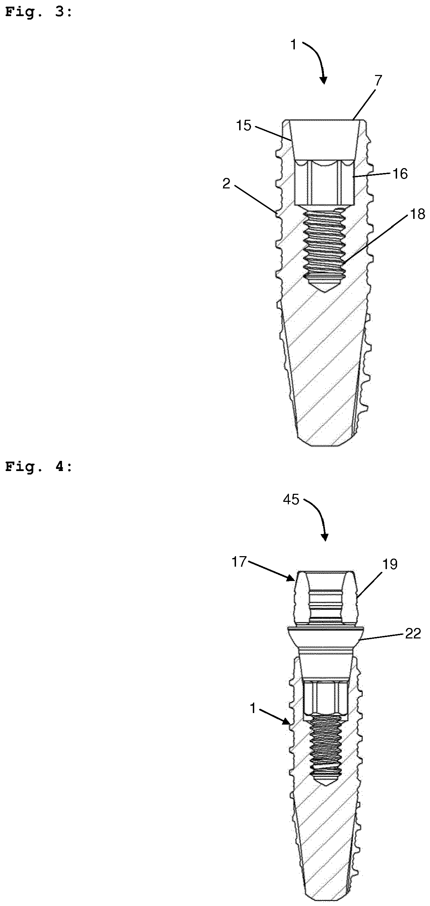

In Figur 3 ist das Dentalimplantat 1 in der Ansicht gemäss Figur 2 dargestellt, wobei in Figur 3 die Darstellung so gewählt wurde, dass die innere Kontur des Dentalimplantathohlraums sichtbar wird. Ausgehend vom koronalen Ende 7 weist der Dentalimplantathohlraum 14 zum apikalen Ende hin den Konusabschnitt 15, den Rotationssicherungsabschnitt 16 sowie das Innengewinde 18 auf.

In Figur 4 ist das Dentalimplantat 1 gemäss Figur 3 dargestellt. Ein Sekundärteil 17 mit einem Sekundärteilkörper 22 ist im Dentalimplantat 1 aufgenommen. Das Dentalimplantat 1 und das Sekundärteil 17 sind mittels einer hier nur teilweise sichtbaren Sekundärteilschraube vormontiert und bilden in der vormontierten Ausführung ein erfindungsgemässes Set 45.

Der Sekundärteilkörper 22 weist auf der Aussenseite eine Verdrehsicherung 19 auf für ein aufzunehmendes Hilfsteil oder Tertiärteil.

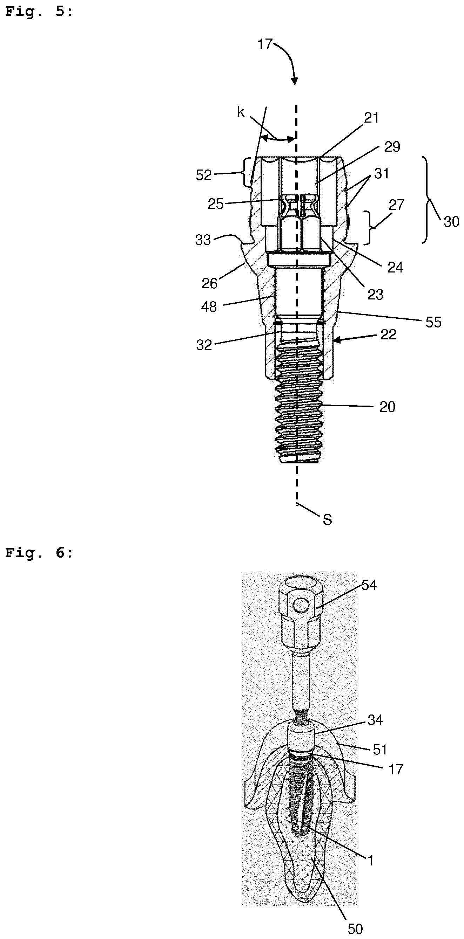

In Figur 5 ist in einer Seitenansicht ein erfindungsgemässes Sekundärteil 17 dargestellt, wobei der Sekundärteilkörper 22 aufgeschnitten ist.

Der Sekundärteilkörper 22 umfasst im Inneren eine Aufnahme 21 für eine Sekundärteilschraube 20. Die Sekundärteilschraube 20 weist einen Schraubenkopf 23 auf. Der Schraubenkopf 23 ist als Aussen-Sechskant ausgebildet, der als Schraubkontur für ein Schraubwerkzeug zum Lösen bzw. Befestigen des Sekundärteils 17 am Dentalimplantat 1 fungiert.

Am Schraubenkopf 23 sind Schlitze 25 angeordnet, dank derer der Kopf radial komprimierbar ist und die als Selbsthaltestruktur fungieren. Zumindest das Sekundärteil 17 umfassend den Sekundärteilkörper 22 und die Sekundärteilschraube 20 können im eingegriffenen Zustand mittels eines Eindrehwerkzeugs gehalten werden, wenn das Sekundärteil 17 am Dentalimplantat mittels der Sekundärteilschraube 20 befestigt ist.

Im Bereich des Schraubenkopfs 23 ist innenseitig in der Aufnahme 21 ein Führungsabschnitt 24 angeordnet zur Führung des Schraubwerkzeugs.

Zudem weist die Aufnahme 21 eine als Innensechskant 29 ausgebildete Kontur für ein Eindrehwerkzeug auf.

Zudem weist der Sekundärteilkörper 22 innenseitig in der Aufnahme 21 ein Lösegewinde 48 auf, um den Sekundärteilkörper 22 beispielsweise nach Entfernen der Sekundärteilschraube 20 sicher und zuverlässig aus dem Implantat entfernen zu können.

Die Sekundärteilschraube 20 weist einen Sollbruchbereich 32 zwischen dem Schraubenkopf und dem Gewinde der Sekundärteilschraube 20 auf. Wird beispielsweise ein zu hohes Drehmoment auf den Schraubenkopf 23 ausgeübt, kann der Sollbruchbereich 32 brechen. Nach Entfernen des oberhalb des Sollbruchbereichs 32 liegenden Schraubenkopfs 23 und des Sekundärteilkörpers 22 kann mittels eines weiteren Werkzeugs der Gewindebereich der Sekundärteilschraube 20 aus dem Implantat entfernt werden.

Am Halsbereich 30 des Sekundärteilkörpers 22 kann ein Tertiärteil oder ein Hilfsteil wie beispielsweise ein Gingivaformer aufgenommen werden. An diesem Ende weist der Sekundärteilkörper 22 in Umfangsrichtung abschnittsweise einen Koronalkonus 52 auf. Der Koronalkonus 52 weist mit der Sekundärteillängsachse einen Koronalkonuswinkel k von etwa 10° auf.

Zwischen einer Schulter 33 und dem Ende, an dem das Hilfsteil oder Tertiärteil aufgenommen werden kann, ist ein Halsbereich 30 angeordnet, der unter anderem den Koronalkonus 52 umfasst.

In dem Halsbereich 30 sind umlaufende Vertiefungen 31 angeordnet, in denen ein Klebematerial zur festen Verbindung zwischen Sekundärteil und Tertiärteil angeordnet werden kann.

Zudem ist im Halsbereich 30 eine Schnappkontur 27 zur gegebenenfalls lösbaren Verbindung mit einem Hilfsteil angeordnet.

Auf der Aussenseite weist der Sekundärteilkörper 22 ausgehend von der Schulter eine Gingivaform-Teilkontur 26 auf, die in einen Sekundärteilkonus 55 übergeht. Der Sekundärteilkonus 55 ist so ausgestaltet, dass dieser in den Konusabschnitt des Dentalimplantats eingreifen kann.

In Figur 6 ist in schematischer Darstellung ein in einem Kieferknochen 50 verankertes, Dentalimplantat 1 dargestellt.

In dem Dentalimplantat 1 ist ein Sekundärteilkörper 17 mit einer Gingivaform-Teilkontur 26 aufgenommen. An dem Sekundärteil 17 ist ein Gingivaformer 34 angeordnet, der zudem die Funktion einer Einheilkappe aufweist. Durch die Anordnung von Sekundärteil 17 mit Gingivaform-Teilkontur und dem Gingivaformer 34 kann das Weichgewebe 51 geformt werden.

Mittels eines Werkzeugs 54 kann der Gingivaformer 34 beispielsweise vom Sekundärteil 17 entfernt oder aber auch eingesetzt werden.

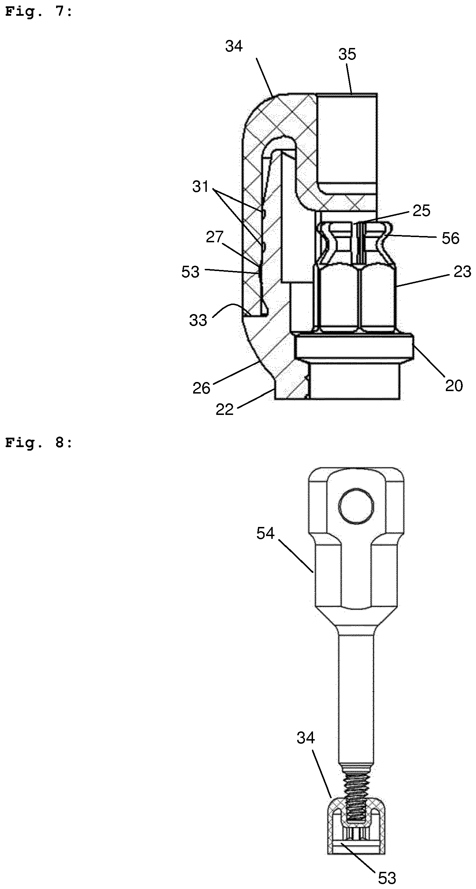

In Figur 7 ist ein Ausschnitt des Sekundärteils gemäss Figur 5 umfassend den Halsbereich dargestellt. Am Sekundärteil umfassend den Sekundärteilkörper 22 ist der Gingivaformer 34 aufgeschnappt. Hierzu ist die Schnappkontur 27 als Vorsprung ausgebildet. Der Gingivaformer 34 weist eine Aussparung 53 auf. Die Aussparung 53 ist im eingeschnappten Zustand so zum Vorsprung der Schnappkontur 27 angeordnet, dass eine Vorspannung in Richtung der Schulter 33 des Sekundärteilkörpers 22 erreicht wird. Dies wird erreicht durch einen entsprechenden axialen Versatz bezüglich der Sekundärteillängsachse der Aussparung 53 und der Schnappkontur 27 zueinander, so dass der Gingivaformer 34 in Richtung der Schulter gedrückt wird. Der axiale Abstand zwischen der Schnappkontur 27 und der Schulter 33 ist also kleiner als der Abstand zwischen der Aussparung und der Endfläche des Gingivaformers 34, die an die Schulter 33 angepresst wird.

Der Schraubenkopf 23 weist eine Schnappstruktur 56 auf, die eine Selbsthaltestruktur für ein Eindrehwerkzeug bildet.

Der Gingivaformer 34 weist einen Eingriffsbereich 35 für ein Werkzeug auf, um den Gingivaformer 34 einzusetzen oder zu entnehmen, wie dies in Figur 6 dargestellt ist.

In Figur 8 ist in einer Seitenansicht ein aufgeschnittener Gingivaformer 34 mit einem Eingriffsbereich dargestellt, in den das Werkzeug 54 eingreift. Innenseitig weist der Gingivaformer die Aussparung 53 zur Wirkverbindung mit einer Schnappkontur des Sekundärteilkörpers auf.

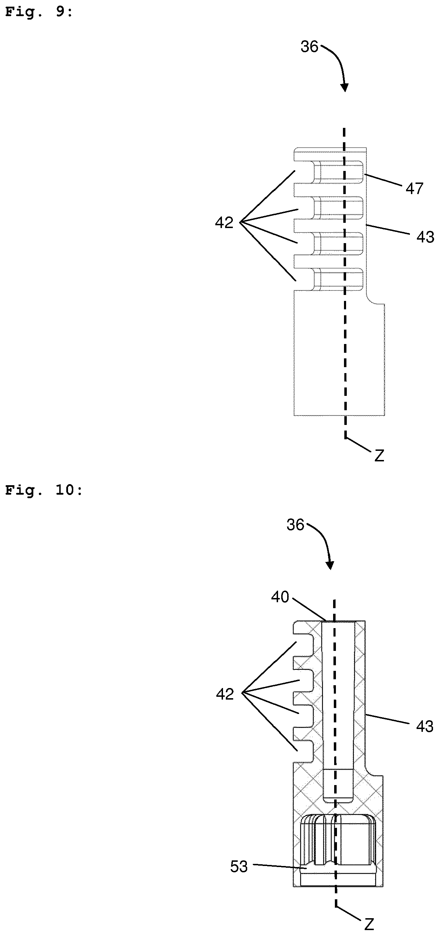

In Figur 9 ist in einer Seitenansicht ein Abformteil 36 dargestellt. Das Abformteil 36 kann als Scankörper, als Abformkörper, als Provisorium oder als Einheilkappe entsprechend den Anforderungen der jeweiligen Verwendung fungieren.

Das Abformteil 36 ist zylindrisch mit einer Zylinderachse Z ausgebildet und weist vier Nuten 42 auf, die im Wesentlichen parallel zur Zylinderachse Z voneinander beabstandet sind und im Wesentlichen senkrecht zur Zylinderachse Z parallel zueinander verlaufen. Hierdurch wird eine Lagebestimmung des Abformteils 36 mittels Verwendung einer Abformmasse ermöglicht, so dass das Abformteil 36 als Abformkörper fungieren kann.

Das Abformteil 36 weist zudem eine plane Fläche 43 auf, die durch einen Teil einer Mantelfläche 47 des zylindrischen Körpers von den Nuten 42 beabstandet ist. Dadurch erhält das Abformteil 36 die Funktion als Scankörper.

Das Abformteil ist aus Kunststoff hergestellt und daher zur Bildung eines Provisoriums leicht bearbeitbar.

In Figur 10 ist in einer aufgeschnittenen Seitenansicht das Abformteil 36 gemäss Figur 9 dargestellt.

Das Abformteil weist einen Abformteileingriff 40 auf für ein Werkzeug zum Einsetzen und/oder Entnehmen des Abformteils 36. Der Abformteileingriff 40 erstreckt sich etwa über die Hälfte der Länge parallel zur Zylinderachse des Abformteils 36.

Das Abformteil 36 weist eine Aussparung 53 zum Aufschnappen auf eine Schnappkontur eines Sekundärteils auf.

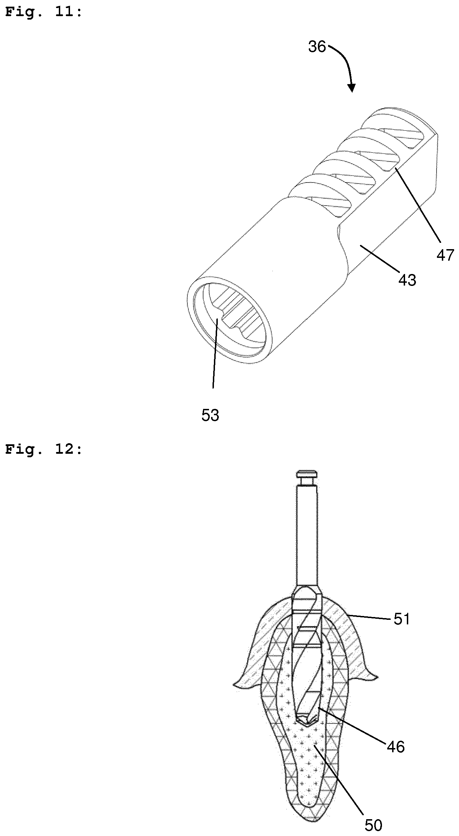

In Figur 11 ist das Sekundärteil 36 gemäss Figur 9 in perspektivischer Darstellung gezeigt.

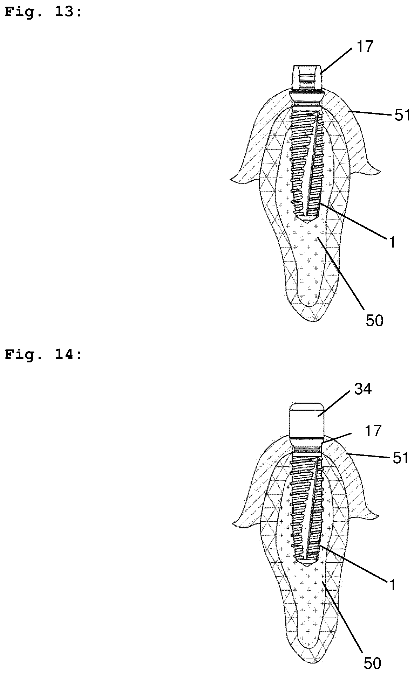

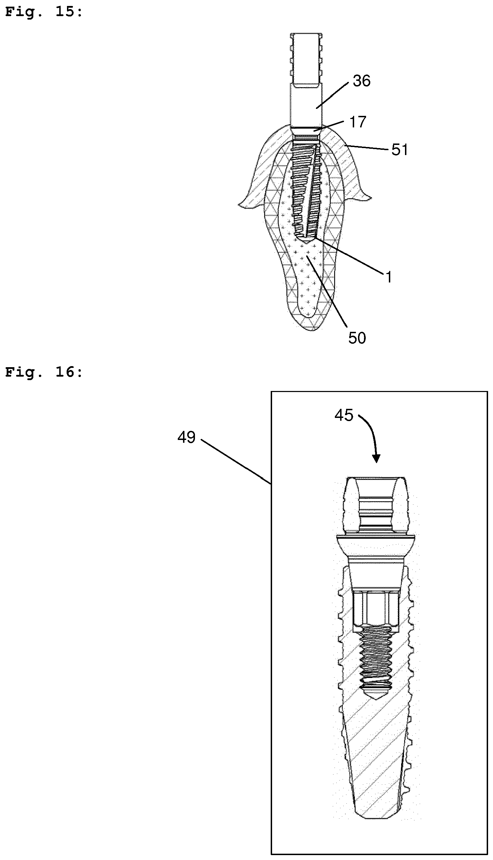

In den Figuren 12 bis 15 ist ein Kieferknochen 50 mit darauf angeordnetem Weichgewebe 51 in schematischer Darstellung gezeigt. In Figur 12 ist dargestellt, wie mittels eines Bohrwerkzeugs 46 eine Bohrung im Kieferknochen 50 erzeugt wird. In Figur 13 ist schematisch dargestellt, wie in der Bohrung ein Dentalimplantat 1 mit Sekundärteil 17 verankert ist. In Figur 14 ist auf dem Sekundärteil 17 wie in Figur 13 dargestellt ein Gingivaformer 34 als Tertiärteil aufgenommen. In Figur 15 ist anstelle des Gingivaformers ein Abformteil 36 aufgenommen, welches als Scankörper, als Abformkörper, als Provisorium oder als Einheilkappe fungieren kann.

In Figur 16 ist in schematischer Darstellung eine Verpackung 49 gezeigt umfassend ein Set 45 bestehend aus einem vormontierten Dentalimplantat mit Sekundärteil umfassend eine Eindreheinrichtung für das Dentalimplantat in den Kieferknochen.

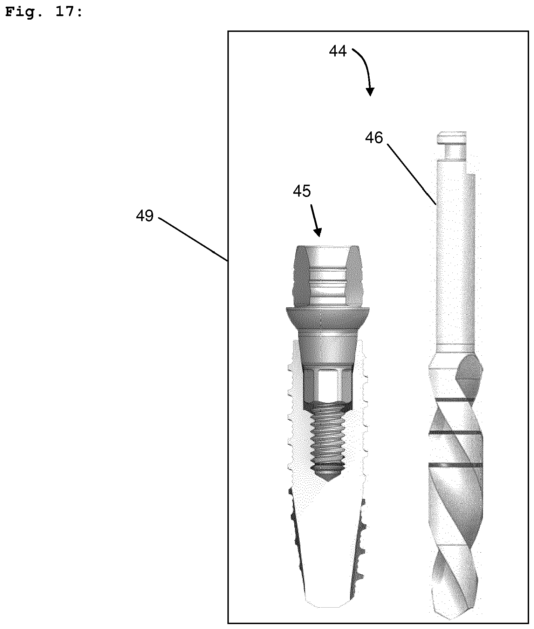

In Figur 17 ist in schematischer Darstellung ein Dentalimplantatsystem 44 umfassend das Set 45 und ein Bohrwerkzeug 46 in einer Verpackung 49 dargestellt.

## Patentansprüche

1. Sekundärteil (17) zur Befestigung an und/oder in einem Dentalimplantat (1) und geeignet zur Aufnahme eines Hilfs- oder Tertiärteils, umfassend einen Sekundärteilkörper (22) mit einer Aufnahme (21) im Inneren, weiter umfassend eine in der Aufnahme (21) aufnehmbare oder aufgenommene Sekundärteilschraube (20), wobei der Sekundärteilkörper (22) eine Eindreheinrichtung in Form einer Kontur zur Aufnahme eines Eindrehwerkzeuges aufweist, wobei die Kontur durch den Sekundärteilkörper gebildet wird, zum Eindrehen des mit dem Sekundärteil (17) verbundenen Dentalimplantats (1) in einen Kieferknochen, wobei die Sekundärteilschraube (20) eine Selbsthaltestruktur für das Eindrehwerkzeug aufweist, die Selbsthaltestruktur an einem Schraubenkopf (23) der Sekundärteilschraube (20) angeordnet ist, **dadurch gekennzeichnet, dass** die Selbsthaltestruktur durch zumindest einen Schlitz (25) gebildet wird und wobei weiter die Selbsthaltestruktur als federnder Kopf ausgebildet ist.

2. Sekundärteil (17) nach Anspruch 1, **dadurch gekennzeichnet, dass** der Schraubenkopf (23) der Sekundärteilschraube (20) auf der Aussenseite eine Schraubkontur für ein Schraubwerkzeug zum Befestigen und/oder Lösen des Sekundärteils am oder vom Dentalimplantat aufweist, und wobei der Schraubenkopf (23) insbesondere als Aussensechskant ausgebildet ist.

3. Sekundärteil (17) nach Anspruch 1 oder 2, **dadurch gekennzeichnet, dass** der Sekundärteilkörper (22) im Bereich des Schraubenkopfs (23) einen Führungsabschnitt (24) für das Schraubwerkzeug aufweist.

4. Sekundärteil (17) nach einem der Ansprüche 1 bis 3, **dadurch gekennzeichnet, dass** die Aufnahme (21) zumindest abschnittsweise als Innensechskant (29) ausgebildet ist.

5. Sekundärteil (17) nach einem der Ansprüche 1 bis 4, **dadurch gekennzeichnet, dass** der Sekundärteilkörper (22) aussenseitig eine Kontur (26) aufweist, die bei bestimmungsgemässem Gebrauch der Gingivaformung dient.

6. Sekundärteil (17) nach einem der Ansprüche 1 bis 5, **dadurch gekennzeichnet, dass** das Sekundärteil (17) einen Sekundärteilkörper (22) mit einer äusseren Schnappkontur (27) zur insbesondere lösbaren Verbindung mit einem Hilfs- oder Tertiärteil aufweist, wobei das Sekundärteil (17) insbesondere eine Verdrehsicherung (19) für das Hilfs- oder Tertiärteil aufweist.

7. Sekundärteil (17) nach Anspruch 6, **dadurch gekennzeichnet, dass** die Schnappkontur (27) zur insbesondere lösbaren Verbindung mit dem Hilfs- oder Tertiärteil derart ausgebildet ist, dass ein am und/oder im Sekundärteil (17) aufschnappbares Hilfs- oder Tertiärteil im Wesentlichen parallel zur Aufschnapprichtung gegen eine Schulter (33) des Sekundärteils (17) anpressbar ist.

8. Sekundärteil (17) nach einem der Ansprüche 1 bis 7, **dadurch gekennzeichnet, dass** der Sekundärteilkörper (22) aussenseitig bei bestimmungsgemässem Gebrauch abschnittsweise konisch zulaufend ausgebildet ist in Richtung des Endes, an dem das Hilfs- oder Tertiärteil aufnehmbar ist.

9. Sekundärteil (17) nach einem der Ansprüche 1 bis 8, **dadurch gekennzeichnet, dass** der Sekundärteilkörper (22) einen Halsbereich (30) aufweist, der insbesondere die Schnappkontur (27) zur Aufnahme des Hilfsteils umfasst, wobei im Halsbereich (30) aussenseitig zumindest eine Vertiefung (31) zur Aufnahme eines Klebemittels derart angeordnet ist, dass der Sekundärteilkörper (22) im Halsbereich (30) mit dem Tertiärteil (28) fest verbindbar ist.

10. Sekundärteil (17) nach Anspruch 9, **dadurch gekennzeichnet, dass** die Vertiefung (31) als um den Halsbereich (30) umlaufende Vertiefung (31) ausgebildet ist, die bevorzugt in einer Ebene im Wesentlichen senkrecht zur Dentalimplantatlängsachse (A) angeordnet ist.

11. Sekundärteil (17) nach Anspruch 10, **dadurch gekennzeichnet, dass** zwei umlaufende Vertiefungen (31) im Halsbereich (30) angeordnet sind, die im Wesentlichen parallel zur Dentalimplantatlängsachse (A) voneinander beabstandet sind.

12. Sekundärteil (17) nach einem der Ansprüche 1 bis 11, **dadurch gekennzeichnet, dass** die Sekundärteilschraube (20) zumindest einen Sollbruchbereich (32), insbesondere zwischen dem Schraubenkopf (23) und dem Gewinde der Sekundärteilschraube (20), aufweist.

13. Sekundärteil (17) nach einem der Ansprüche 1 bis 12, **dadurch gekennzeichnet, dass** der Sekundärteilkörper (22) ein insbesondere inneres Lösegewinde (48) für ein Löseinstrument aufweist.

14. Set umfassend ein Dentalimplantat (1) und ein Sekundärteil (17) gemäss einem der Ansprüche 1 bis 14, **dadurch gekennzeichnet, dass** das Sekundärteil (17) im Dentalimplantat (1) mittels der Sekundärteilschraube (20) vormontiert ist.

15. Verpackung (49) enthaltend ein Set (45) gemäss Anspruch 14.

16. Verpackung (49) gemäss Anspruch 15, **dadurch gekennzeichnet, dass** die Verpackung (49) ein steriles Set (45) enthält.

## Claims

1. Secondary part (17) for attachment to and/or in a dental implant (1) and suitable for receiving an auxiliary or tertiary part, comprising a secondary part body (22) with a recess (21) in the inside, further comprising a secondary part screw (20) receivable or received in the recess (21), the secondary part body (22) having a screw-in mechanism in the form of a contour for receiving a screw-in tool, the contour being formed by the secondary part body, for screwing in the dental implant (1) connected to the secondary part (17) into a jaw bone, wherein the secondary part screw (20) has a self-retaining structure for the screwing-in tool, the self-retaining structure is arranged on a screw head (23) of the secondary part screw (20), **characterized in that** the self-retaining structure is formed by at least one slit (25) and wherein further the self-retaining structure is formed as a resilient head.

2. Secondary part (17) according to claim 1, **characterized in that** the screw head (23) of the secondary part screw (20) has on the outside a screw contour for a screwing tool for fastening and/or releasing the secondary part to or from the dental implant, and wherein the screw head (23) is in particular configured as an external hexagon.

3. Secondary part (17) according to claim 1 or 2, **characterized in that** the secondary part body (22) has, in the region of the screw head (23), a guide section (24) for the screwing tool.

4. Secondary part (17) according to one of claims 1 to 3, **characterized in that** the recess (21) is designed at least in part as a hexagon socket (29).

5. Secondary part (17) according to one of claims 1 to 4, **characterized in that** the secondary part body (22) has a contour (26) on the outside which serves, when used as intended, to shape the gingiva.

6. Secondary part (17) according to one of claims 1 to 5, **characterized in that** the secondary part (17) has a secondary part body (22) with an outer snap contour (27) for in particular releasable connection to an auxiliary or tertiary part, wherein the secondary part (17) has in particular an anti-rotation device (19) for the auxiliary or tertiary part.

7. Secondary part (17) according to claim 6, **characterized in that** the snap contour (27) for in particular releasable connection to the auxiliary or tertiary part is designed in such a way that an auxiliary or tertiary part which can be snapped on and/or in the secondary part (17) can be pressed substantially parallel to the snapping direction against a shoulder (33) of the secondary part (17).

8. Secondary part (17) according to one of the claims 1 to 7, **characterized in that** the secondary part body (22) is designed, when used as intended, conically tapering in sections on the outside in the direction of the end at which the auxiliary or tertiary part is receivable.

9. Secondary part (17) according to one of claims 1 to 8, **characterized in that** the secondary part body (22) has a neck region (30) which in particular comprises the snap contour (27) for receiving the auxiliary part, wherein in the neck region (30) at least one deepening (31) for receiving an adhesive is arranged on the outside in such a way that the secondary part body (22) can be firmly connected to the tertiary part (28) in the neck region (30).

10. Secondary part (17) according to claim 9, **characterized in that** the deepening (31) is formed as a deepening (31) surrounding the neck region (30), which is preferably arranged in a plane substantially perpendicular to the dental implant longitudinal axis (A).

11. Secondary part (17) according to claim 10, **characterized in that** two circumferential deepenings (31) are arranged in the neck region (30), which are spaced apart from one another substantially parallel to the dental implant longitudinal axis (A).

12. Secondary part (17) according to one of claims 1 to 11, **characterized in that** the secondary part screw (20) has at least one predetermined breaking region (32), in particular between the screw head (23) and the thread of the secondary part screw (20).

13. Secondary part (17) according to one of claims 1 to 12, **characterized in that** the secondary part body (22) has an in particular internal release thread (48) for a release instrument.

14. Set comprising a dental implant (1) and a secondary part (17) according to one of claims 1 to 14, **characterized in that** the secondary part (17) is pre-assembled in the dental implant (1) by means of the secondary part screw (20).

15. Package (49) containing a set (45) according to claim 14.

16. Package (49) according to claim 15, **characterized in that** the package (49) contains a sterile set (45).

## Revendications

1. Partie secondaire (17) destinée à être fixée sur et/ou dans un implant dentaire (1) et adaptée pour recevoir une partie auxiliaire ou tertiaire, comprenant un corps de partie secondaire (22) avec un logement (21) à l'intérieur, comprenant en outre une vis de partie secondaire (20) qui peut être reçue ou est reçue dans le logement (21), le corps de partie secondaire (22) présentant un mécanisme de vissage sous la forme d'un contour pour recevoir un outil de vissage, le contour étant formé par le corps de partie secondaire, pour le vissage de l'implant dentaire (1) relié à la partie secondaire (17) dans un os de la mâchoire, la vis de la partie secondaire (20) présentant une structure de retenue par soi-même pour l'outil de vissage, la structure de retenue par soi-même étant disposée sur une tête de vis (23) de la vis de la partie secondaire (20), **caractérisé en ce que** la structure de retenue par soi-même est formée par au moins une fente (25) et la structure de retenue par soi-même étant en outre réalisée sous forme de tête élastique.

2. Partie secondaire (17) selon la revendication 1, **caractérisée en ce que** la tête de vis (23) de la vis de partie secondaire (20) présente à l'extérieur un contour de vis pour un outil de vissage destiné à fixer et/ou à desserrer la partie secondaire sur ou de l'implant dentaire, et dans laquelle la tête de vis (23) est conçue en particulier comme un hexagone externe.

3. Partie secondaire (17) selon la revendication 1 ou 2, **caractérisée en ce que** le corps de la partie secondaire (22) présente dans la zone de la tête de vis (23) une section de guidage (24) pour l'outil de vissage.

4. Partie secondaire (17) selon l'une des revendications 1 à 3, **caractérisée en ce que** le logement (21) est formé au moins par sections comme une douille hexagonale (29).

5. Partie secondaire (17) selon l'une des revendications 1 à 4, **caractérisée en ce que** le corps de la partie secondaire (22) présente un contour (26) sur l'extérieur qui sert en cas d'utilisation conforme à la destination à former la gencive.

6. Partie secondaire (17) selon l'une des revendications 1 à 5, **caractérisée en ce que** la partie secondaire (17) présente un corps de partie secondaire (22) avec un contour d'encliquetage extérieur (27) pour une liaison notamment détachable avec une partie auxiliaire ou tertiaire, la partie secondaire (17) présentant notamment un dispositif anti-rotation (19) pour la partie auxiliaire ou tertiaire.

7. Pièce secondaire (17) selon la revendication 6, **caractérisée en ce que** le contour d'encliquetage (27) pour la liaison notamment détachable avec la pièce auxiliaire ou tertiaire est conçu de telle manière qu'une pièce auxiliaire ou tertiaire encliquetable sur et/ou dans la pièce secondaire (17) peut être pressée contre un épaulement (33) de la pièce secondaire (17) sensiblement parallèle à la direction d'encliquetage.

8. Partie secondaire (17) selon l'une des revendications 1 à 7, **caractérisée en ce que** le corps de la partie secondaire (22) est conçu lorsqu'il est utilisé comme prévu pour être conique en sections sur l'extérieur en direction de l'extrémité à laquelle la partie auxiliaire ou tertiaire peut être reçue.

9. Partie secondaire (17) selon l'une des revendications 1 à 8, **caractérisée en ce que** le corps de partie secondaire (22) présente une zone de col (30) qui comprend notamment le contour d'encliquetage (27) pour recevoir la partie auxiliaire, au moins un évidement (31) pour recevoir un adhésif étant disposé à l'extérieur dans la zone de col (30) de telle sorte que le corps de partie secondaire (22) peut être relié de manière fixe à la partie tertiaire (28) dans la zone de col (30).

10. Partie secondaire (17) selon la revendication 9, **caractérisé en ce que** l'évidement (31) est formé comme une dépression (31) entourant la zone du col (30), qui est de préférence disposée dans un plan sensiblement perpendiculaire à l'axe longitudinal (A) de l'implant dentaire.

11. Partie secondaire (17) selon la revendication 10, **caractérisé en ce que** deux évidements circonférentiels (31) sont disposés dans la zone du col (30), qui sont espacés l'un de l'autre sensiblement parallèlement à l'axe longitudinal (A) de l'implant dentaire.

12. Partie secondaire (17) selon l'une des revendications 1 à 11, **caractérisée en ce que** la vis de partie secondaire (20) présente au moins une zone de rupture prédéterminée (32), en particulier entre la tête de vis (23) et le filetage de la vis de partie secondaire (20).

13. Partie secondaire (17) selon l'une des revendications 1 à 12, **caractérisée en ce que** le corps de la partie secondaire (22) présente un filetage en particulier interne de desserrage (48) pour un instrument de desserrage.

14. Ensemble comprenant un implant dentaire (1) et une partie secondaire (17) selon l'une des revendications 1 à 14, **caractérisé en ce que** la partie secondaire (17) est préassemblée dans l'implant dentaire (1) au moyen de la vis de la partie secondaire (20).

15. Emballage (49) contenant un ensemble (45) selon la revendication 14.

16. Un emballage (49) selon la revendication 15, **caractérisé en ce que** l'emballage (49) contient un ensemble stérile (45).
